# FASCICULE DE BREVET EUROPEEN

(11) **EP 3 586 703 B1**
(45) Date de publication et mention de la délivrance du brevet: **25.11.2020**
(21) Numéro de dépôt: 19182271.7
(22) Date de dépôt: 25.06.2019
(51) Int. Cl.: A47J 43/12, A47J 43/07, A47J 31/44, A47J 31/46

(54) **DISPOSITIF D'AGITATION ROTATIF DE MACHINE DE PRÉPARATION DE BOISSONS ÉQUIPÉ D'UN CLAPET ANTI-RETOUR**
DREHRÜHRVORRICHTUNG FÜR GETRÄNKEVORBEREITUNGSMASCHINE MIT RÜCKSTANDVENTIL
ROTARY STIRRING DEVICE FOR BEVERAGE PREPARATION MACHINE EQUIPPED WITH A ONE-WAY VALVE

(30) Priorité: 28.06.2018 FR 1855917
(43) Date de publication de la demande: 01.01.2020
(73) Titulaire: SEB S.A., 69130 Ecully (FR)
(72) Inventeur: MORIN, Gilles, 69290 POLLIONNAY (FR); RUSSIER, Fabien, 21000 DIJON (FR)
(74) Mandataire: SEB Developpement Brevets

(56) Documents cités:
- WO-A2-2017/003289
- FR-A1- 2 879 426
- FR-A1- 3 056 896
- US-A1- 2009 129 199

## Description

### Domaine technique

La présente invention concerne les appareils de distribution de boissons qui comportent un dispositif d'agitation rotatif avec distribution d'eau chaude et/ou de vapeur, notamment des machines de préparation de boissons à base de lait chaud ou froid moussé (cappuccino, latté, chocolat, cocktail...) ou à base de crème fouettée (cafés et chocolats spéciaux).

### Etat de la technique

Il est connu, notamment du document FR3056896, des machines de préparation de boissons qui comportent notamment un dispositif d'agitation rotatif, lequel comprend un outil rotatif autour d'un axe vertical et destiné à agiter une préparation contenue dans un récipient et un conduit d'acheminement d'eau chaude et/ou de vapeur vers l'outil rotatif en sorte de diluer et/ou réchauffer ladite préparation dans le récipient en la faisant mousser. Ces machines comportent également un système de chauffe permettant la production d'eau chaude et/ou de vapeur qui alimente ledit conduit d'acheminement d'eau chaude et/ou de vapeur.

Un tel exemple de machine de préparation de boissons est décrit dans la demande de brevet EP2721980A1. Selon la mise en œuvre décrite dans cette demande de brevet EP2721980A1, le conduit d'acheminement comporte une partie tubulaire qui s'étend le long de l'axe vertical entre une première portion d'extrémité qui est accouplée à l'outil rotatif et une seconde portion d'extrémité qui est accouplée de manière amovible à un arbre d'entrainement. La possibilité de démonter la partie tubulaire avec l'outil rotatif a pour avantage de faciliter leur nettoyage sous l'eau ou dans un lave-vaisselle.

Un inconvénient demeure cependant selon cette mise en œuvre précitée. En effet, la préparation contenue dans le récipient, dans laquelle est plongée la première portion d'extrémité avec l'outil rotatif, tend à remonter à l'intérieur du conduit d'acheminement en fin de cycle de préparation ; cela est dû à l'arrêt de la production d'eau chaude et/ou de vapeur, le refroidissement du système de chauffe de la machine de préparation de boissons ayant pour incidence de générer une aspiration par ledit conduit d'acheminement, en direction du système de chauffe. Il en résulte un encrassement à l'intérieur de la partie tubulaire, voire également à l'intérieur du reste du conduit d'acheminement qui est indémontable ou difficilement démontable, contrairement à la partie tubulaire. L'encrassement à l'intérieur de la partie tubulaire complexifie son nettoyage, malgré la possibilité de la démonter.

### Résumé de l'invention

La présente invention met en œuvre un dispositif d'agitation rotatif d'une machine de préparation de boissons qui pallie cet inconvénient.

Selon l'invention, le dispositif d'agitation rotatif comprend un outil rotatif autour d'un axe A et destiné à agiter une préparation contenue dans un récipient, et un conduit d'acheminement d'eau chaude et/ou de vapeur vers l'outil rotatif. Le conduit d'acheminement comporte une partie tubulaire qui s'étend le long de l'axe A entre une première portion d'extrémité qui est accouplée à l'outil rotatif au moyen d'un premier dispositif d'accouplement et une seconde portion d'extrémité qui est accouplée à un arbre d'entrainement au moyen d'un second dispositif d'accouplement.

De manière remarquable, le dispositif d'agitation rotatif comprend un clapet anti-retour agencé au niveau de la première portion d'extrémité, le clapet anti-retour étant configuré pour empêcher la montée de ladite préparation vers l'intérieur de la partie tubulaire. Ainsi, le clapet anti-retour s'ouvre pour laisser passer l'eau chaude et/ou la vapeur en sortie du conduit d'acheminement, pour son injection dans la préparation et, au contraire, se referme sous l'effet de l'aspiration engendrée dans le conduit d'acheminement, empêchant ainsi la montée de la préparation par la première portion d'extrémité dudit conduit d'acheminement.

Le second dispositif d'accouplement entre la seconde portion d'extrémité de la partie tubulaire et l'arbre d'entraînement peut être de conceptions très variées. Ainsi, le second dispositif d'accouplement peut assurer un montage permanent entre la seconde portion d'extrémité et l'arbre d'entraînement de sorte qu'ils sont difficilement démontables voire pas du tout, par exemple en réalisant la partie tubulaire et l'arbre d'entraînement au moyen d'une seule et même pièce ou en assemblant la partie tubulaire et l'arbre d'entraînement au moyen de vis de fixation. Au contraire, ce second dispositif d'accouplement peut assurer un montage de manière amovible entre la seconde portion d'extrémité et l'arbre d'entraînement, par exemple en les vissant ou en les emboîtant l'un dans l'autre. Le démontage de la seconde portion d'extrémité de la partie tubulaire vis-à-vis de l'arbre d'entraînement sera préférable afin de faciliter son nettoyage et celui de l'outil rotatif, par exemple dans l'hypothèse d'une défaillance du clapet anti-retour - mal remis en place après son démontage - engendrant une montée de la préparation à l'intérieur de la partie tubulaire.

Selon une réalisation préférée du dispositif d'agitation rotatif, le clapet anti-retour est un joint souple comportant deux lèvres du type « bec de canard ». Cette mise en œuvre offre une grande sensibilité à l'ouverture lors de l'injection d'eau chaude et/ou de vapeur et à la fermeture lors de l'aspiration, propice à une utilisation sur une machine de préparation de boissons. En outre, ce type de joint souple est simple de conception, peu onéreux et bien adapté au domaine alimentaire.

Selon l'invention, le premier dispositif d'accouplement comporte des moyens d'emboîtement démontables mis en œuvre entre l'outil rotatif et la première portion d'extrémité. En outre, les moyens d'emboîtement sont configurés pour maintenir en position le clapet anti-retour au niveau de la première portion d'extrémité.

Selon une réalisation, ces moyens d'emboîtement définissent un logement dans lequel est placé le clapet anti-retour. En outre, le clapet anti-retour comprend une collerette qui s'étend radialement à l'axe A et qui est maintenue bloquée en sandwich entre une première face d'appui de la première portion d'extrémité et une seconde face d'appui de l'outil rotatif. Cela permet un maintien convenable du clapet vis-à-vis de la première portion d'extrémité et de l'outil rotatif. Cela permet également d'assurer une étanchéité entre la première portion d'extrémité et le clapet. De préférence, la collerette dispose d'une souplesse permettant de l'écraser légèrement entre la première face d'appui et la seconde face d'appui, afin d'optimiser cette étanchéité entre le clapet et la première portion d'extrémité.

Selon une réalisation préférentielle de ces moyens d'emboîtement, l'outil rotatif comprend un embout comportant le logement, dans lequel est défini un épaulement interne formant la seconde face d'appui. En outre, la première portion d'extrémité est configurée pour s'emboîter dans le logement, l'extrémité inférieure de la première portion d'extrémité formant la première face d'appui.

Des variantes de réalisation restent toutefois envisageables dans le cadre de la présente invention. Une conception inverse à celle qui précède peut notamment être mise en œuvre. Dans ce cas, la première portion d'extrémité de la partie tubulaire comprend un embout qui comporte le logement dans lequel est défini un épaulement interne formant la première face d'appui ; l'outil rotatif est alors configuré pour s'emboîter dans le logement, l'extrémité de l'outil formant la seconde face d'appui.

Selon la réalisation préférentielle précitée des moyens d'emboîtement, la première portion d'extrémité comprend un épaulement externe sur lequel une extrémité de l'embout vient en appui lors de l'emboîtement de ladite première portion d'extrémité dans le logement de l'outil rotatif. Cela permet de délimiter la position d'emboîtement entre l'outil rotatif et la première portion d'extrémité, afin de maîtriser parfaitement l'écrasement de la collerette prise en sandwich entre la première face d'appui et la seconde face d'appui.

Selon une réalisation préférentielle, les moyens d'emboîtement sont configurés pour assurer un démontage manuel de l'outil rotatif, simplement en tirant sur ledit outil rotatif pour le déboîter de la première portion d'extrémité, inversement en poussant dessus pour l'emboîter sur la première portion d'extrémité. On pourrait en effet envisager des variantes nécessitant une clé de démontage.

Selon le dispositif d'agitation rotatif objet de l'invention, l'outil rotatif comporte un organe d'appui destiné à coopérer avec un fond du récipient. En outre, la distance D entre le clapet anti-retour et l'organe d'appui est inférieure à 30 mm, de préférence inférieure à 20 mm, de préférence inférieure à 5 mm. Cela permet de laisser une faible longueur en contact avec la préparation, à l'intérieur de l'outil rotatif et éventuellement à l'intérieur de la première portion d'extrémité, selon les diverses variantes de réalisation des moyens d'emboîtement, comme celles présentées ci-avant.

Selon le dispositif d'agitation rotatif objet de l'invention, l'outil rotatif comporte des ailettes internes agencées sous le clapet anti-retour et destinées à faire remonter vers le clapet anti-retour un produit de nettoyage lorsque la partie tubulaire et l'outil rotatif sont mis en rotation avec du produit de nettoyage contenu dans un récipient. Cela facilite le nettoyage autour du clapet anti-retour lorsqu'il n'est pas démonté de la première portion d'extrémité et de l'outil rotatif.

Selon l'invention, le dispositif d'agitation rotatif comporte un moteur électrique destiné à entrainer en rotation l'arbre d'entraînement. L'utilisation d'un moteur électrique assure une maîtrise de la rotation de l'outil rotatif et, ainsi, une qualité du moussage de la préparation. Des variantes sont envisageables, notamment l'utilisation d'une turbine qui est entraînée en rotation grâce à la vapeur produite, ladite turbine étant accouplée à l'arbre d'entraînement.

Selon le dispositif d'agitation rotatif objet de l'invention, l'arbre d'entrainement comporte une partie creuse d'acheminement d'eau chaude et/ou de vapeur qui communique avec la partie tubulaire lors de leur accouplement. Ainsi l'eau chaude et/ou la vapeur circule dans la partie creuse de l'arbre d'entraînement puis dans la partie tubulaire.

Selon cette réalisation précitée, le dispositif d'agitation rotatif comporte une boîte à vapeur comportant une chambre, un canal radial d'entrée vapeur, deux paliers étanches de guidage de l'arbre d'entrainement. En outre, la partie creuse d'acheminement d'eau chaude et/ou de vapeur est configurée pour relier la chambre à la partie tubulaire.

### Brève description des figures

La description suivante met en évidence les caractéristiques et avantages de la présente invention. Cette description s'appuie sur des figures, parmi lesquelles :
- Les figures 1 et 2 illustrent deux vues d'ensemble d'un mode de réalisation d'une machine de préparation de boissons comportant un dispositif d'agitation rotatif selon l'invention, suivant deux positions dudit dispositif ;
- La figure 3 illustre une coupe du dispositif d'agitation rotatif mettant notamment en évidence l'assemblage de la partie tubulaire avec l'arbre d'entraînement et le conduit d'acheminement de l'eau chaude et/ou de la vapeur ;
- Les figures 4 et 5 illustrent une première réalisation du premier dispositif d'accouplement entre la première portion d'extrémité et l'outil rotatif ;
- La figure 6 illustre une réalisation préférentielle de l'outil rotatif selon cette première réalisation du dispositif d'accouplement ;
- La figure 7 illustre une réalisation préférentielle de la première portion d'extrémité de la partie tubulaire selon cette première réalisation du dispositif d'accouplement ;
- Les figures 8 et 9 illustrent une réalisation préférentielle du clapet anti-retour ;
- La figure 10 illustre une seconde réalisation du premier dispositif d'accouplement entre la première portion d'extrémité et l'outil rotatif

### Description détaillée

Dans la suite de la description, la machine de préparation de boissons est dénommée « machine ».

Dans la suite de la description, les termes « horizontal », « vertical », « inférieur », « supérieur », « longitudinal », « transversal », « haut », « bas », qui pourraient être employés, le seront en considération de la position de la machine reposant sur un plan de travail, en situation d'usage.

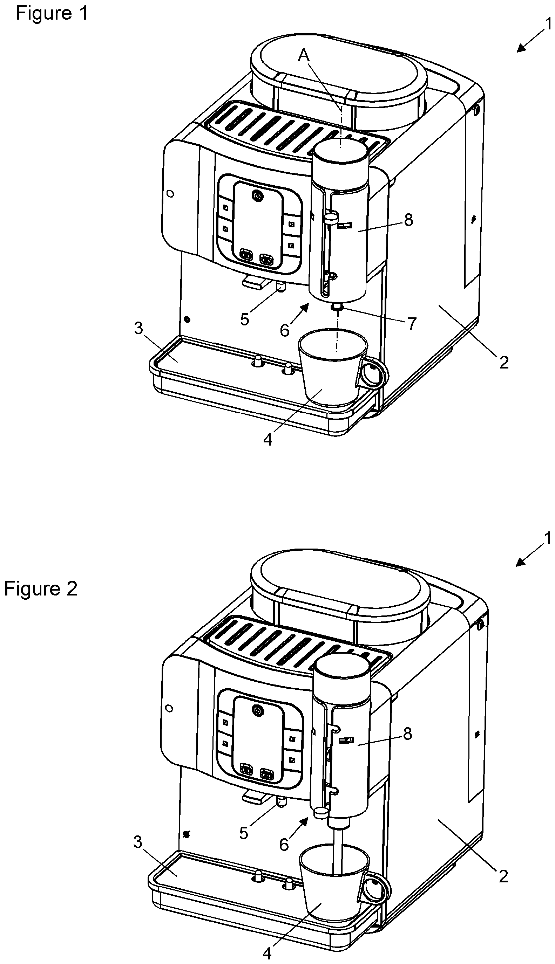

Sur les figures 1 et 2, la machine 1 comporte notamment un bâti 2, un support 3 sur lequel un récipient 4 peut être disposé durant la préparation d'une boisson, et un dispositif de distribution qui comporte notamment une buse 5 permettant la distribution d'une boisson à base de café, de thé et/ou de chocolat, par exemple. La machine 1 comprend également un dispositif de chauffe (non illustré) permettant la production d'eau chaude et/ou de vapeur. Ces caractéristiques sont déjà connues sur les machines de préparation de boissons, elles ne sont donc pas détaillées, l'homme du métier pouvant se référer aux machines existantes.

La machine 1 comprend également un dispositif d'agitation rotatif 6 comprenant un outil rotatif 7 autour d'un axe A et destiné à coopérer avec une préparation contenue dans le récipient 4, par exemple du lait. Cet axe A est défini verticalement sur la machine 1. Le dispositif d'agitation rotatif 6 est monté en translation selon l'axe A, à l'intérieur d'une pièce de guidage 8 agencée sur le bâti 2, de sorte à permettre son déplacement selon une position haute illustrée en figure 1, où l'outil rotatif 7 est dégagé du récipient 4, et une position basse illustrée en figure 2, où l'outil rotatif 7 est inséré dans le récipient 4 et plongé dans la préparation.

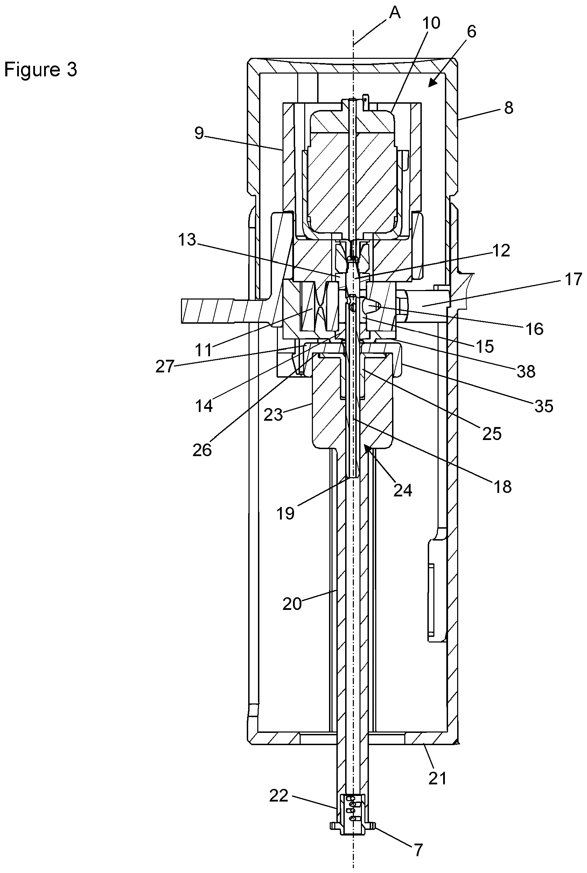

Tel qu'illustré sur la figure 3, le dispositif d'agitation rotatif 6 comporte un corps 9 monté en translation selon l'axe A sur la pièce de guidage 8, au moyen de glissières (non illustrées). A l'intérieur du corps 9 sont agencés un moteur électrique 10 et une boîte à vapeur 11. Le moteur électrique 10 entraîne en rotation selon l'axe A un arbre d'entrainement 12, lequel est monté en liaison pivot d'axe A vis-à-vis de la boîte à vapeur 11 au moyen de deux paliers 13, 14, de roulement étanches, l'étanchéité mise en œuvre entre la boîte à vapeur 11, les paliers 13, 14 et l'arbre d'entraînement 12 permettant de définir une chambre 15. Un canal radial 16 traverse la boîte vapeur 11 et débouche dans la chambre 15, le canal radial 16 étant raccordé à un conduit souple 17 qui permet les déplacements en translation selon l'axe A du dispositif d'agitation rotatif 6 vis-à-vis de la pièce de guidage 8, sans contrainte. Le conduit souple 17 alimente la chambre 15 en eau chaude et/ou en vapeur. L'arbre d'entrainement 12 présente une partie creuse 18 s'étendant selon l'axe A et débouchant d'un côté dans la chambre 15 et, de l'autre côté, sur l'extrémité inférieure 19 de l'arbre d'entraînement 12.

Tel qu'illustré sur la figure 3, le dispositif d'agitation rotatif 6 comprend une partie tubulaire 20 qui s'étend selon l'axe A et passe au travers d'un fond 21 de la pièce de guidage 8. La portion d'extrémité inférieure 22 de la partie tubulaire 20 est accouplée de manière amovible avec l'outil rotatif 7, par emboîtement. La portion d'extrémité supérieure 23 de la partie tubulaire 20 est accouplée de manière amovible avec l'arbre d'entrainement 12. Ainsi, le conduit souple 17, le canal radial 16, la chambre 15, la partie creuse 18 de l'arbre d'entraînement 12 et la partie tubulaire 20 définissent un conduit 24 d'acheminement d'eau chaude et/ou de vapeur vers l'outil rotatif 7.

Tel qu'illustré en regard de la figure 3, l'accouplement de la portion d'extrémité supérieure 23 de la partie tubulaire 20 avec l'arbre d'entraînement 12 est mis en œuvre par l'intermédiaire d'un manchon 25 qui présente une forme tubulaire, de préférence conique, et qui est réalisé dans un matériau souple. De préférence, ce matériau souple est choisi parmi les élastomères, de préférence une matière silicone. Le manchon 25 est bloqué en rotation selon l'axe A vis-à-vis de l'extrémité supérieure 23, par exemple au moyen de méplats (non illustrés) mis en œuvre entre ces deux éléments. En outre, l'emboîtement de l'arbre d'entraînement 12 dans le manchon 25 suffit à bloquer la rotation selon l'axe A et à assurer une étanchéité entre ces deux éléments, grâce à l'utilisation de ce matériau souple. L'extrémité supérieure 23 de la partie tubulaire 20 est fermée par un cache 27 qui permet de maintenir le manchon 25 logé dans la portion d'extrémité supérieure 23, bloquant ainsi sa translation selon l'axe A. La mise en place du cache 27 assure également une étanchéité entre le manchon 25 et la portion d'extrémité supérieure 23. Durant l'utilisation du dispositif d'agitation rotatif 6, l'injection d'eau chaude et/ou de vapeur peut engendrer une montée en pression dans le conduit 24 d'acheminement d'eau chaude et/ou de vapeur. L'étanchéité mise en œuvre entre le manchon 25 et l'arbre d'entrainement 12, d'une part, et entre le manchon 25 et la portion d'extrémité supérieure 23, d'autre part, évite tout risque de fuite d'eau chaude et/ou de vapeur au niveau du raccordement entre la partie tubulaire 20 et l'arbre d'entrainement 12.

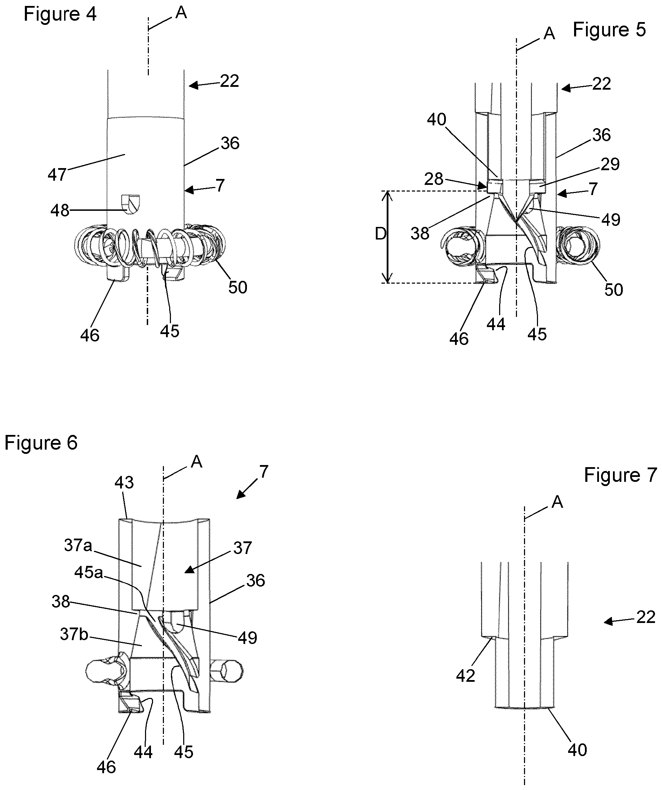

Tel qu'illustré en regard des figures 4 à 9, un clapet anti-retour 28 est agencé entre la portion d'extrémité inférieure 22 de la partie tubulaire 20 et l'outil rotatif 7. Ce clapet anti-retour 28 évite les remontées de la préparation dans le conduit 24 d'acheminement d'eau chaude et/ou de vapeur. Le clapet anti-retour 28 est constitué d'un joint souple, de type « bec de canard », qui comporte une collerette 29 prolongée vers le bas par deux lèvres 30, 31 qui se rejoignent en pointe pour ne laisser apparaître qu'une fente 32 ; un orifice 33 s'étend selon l'axe A et traverse le joint souple pour se terminer par ladite fente 32. Les deux lèvres 30, 31 s'écartent et la fente 32 s'ouvre pour laisser sortir l'eau chaude et/ou la vapeur circulant dans le sens de la flèche 34. Au contraire, les deux lèvres 30, 31 se pincent et la fente 32 se ferme pour empêcher le passage de la préparation dans le récipient 4 qui tente de remonter dans le sens de la flèche 35, lord d'une aspiration engendrée dans le conduit 24 d'acheminement d'eau chaude et/ou de vapeur. De préférence, le clapet anti-retour 28 est mis en œuvre dans un matériau élastomère, de préférence un matériau silicone apte au contact alimentaire.

Tel qu'illustré en regard de ces figures 4 à 9, l'outil rotatif 7 comprend un embout 36 qui s'étend selon l'axe A et comporte un logement 37, dans lequel est prévu un épaulement interne 38. Le clapet anti-retour 28 est engagé dans le logement jusqu'à ce que la face inférieure 39 de la collerette 29 vienne en appui contre l'épaulement interne 38, ce qui délimite la position d'arrêt du clapet anti-retour 28 dans l'embout 36. Le logement 37 définit un tronçon supérieur 37a et un tronçon inférieur 37b, lesquels sont délimités l'un vis-à-vis de l'autre par l'épaulement interne 38 ; ainsi, la collerette 29 est disposée dans le tronçon supérieur 37a et les deux lèvres 30, 31 sont disposées dans le tronçon inférieur 37b. La portion d'extrémité inférieure 22 s'emboîte dans le tronçon supérieur 37a, l'extrémité inférieure 40 de la partie tubulaire 20 venant en appui contre la face supérieure 41 de la collerette 29. Ainsi la collerette 29 est prise en sandwich entre l'extrémité inférieure 40 de la partie tubulaire 20 et l'épaulement interne 38 dans l'embout 36. La portion d'extrémité inférieure 22 comprend un épaulement externe 42 qui vient en butée contre l'extrémité supérieure 43 de l'embout 36 lors de l'emboîtement de ladite portion d'extrémité inférieure 22 dans le tronçon supérieur 37a ; cela permet de définir une position d'emboîtement déterminée entre la portion d'extrémité inférieure 22 et l'embout 36 de sorte à exercer une pression suffisante - mais pas trop forte - sur la collerette 29, garantissant une étanchéité entre l'extrémité inférieure 40 de la partie tubulaire 20 et la face supérieure 41 du clapet anti-retour 28.

Tel qu'illustré aux figures 4 à 6, le tronçon inférieur 37b du logement 37 comprend deux ailettes 44, 45 ayant une forme hélicoïdale qui s'étendent de l'extrémité inférieure 46 de l'embout 36 jusqu'à l'épaulement interne 38, c'est-à-dire sur la longueur du tronçon inférieur 37b. Le contour 47 de l'embout 36 comporte deux fenêtres 48, 49 qui débouchent dans le tronçon inférieur 37b du logement, de manière attenante au-dessus des extrémités supérieures 45a des ailettes 44, 45, à une hauteur correspondant à celle des deux lèvres 30, 31 du clapet anti-retour 28.

Lorsque la portion d'extrémité inférieure 22 de la partie tubulaire 20 et l'outil rotatif 7 sont plongés dans le récipient 4, seule la zone correspondant au tronçon inférieur 37b du logement 37 est en contact avec la préparation dans le récipient 4. L'extrémité inférieure 46 de l'embout 36, qui vient en appui contre le fond du récipient 4, limite l'enfoncement de l'outil rotatif 7 dans ledit récipient 4. De préférence, la distance D séparant la face inférieure 39 sur le clapet anti-retour 28 et l'extrémité inférieure 46 de l'embout 36 n'excède pas 30 mm, de préférence 20 mm, de préférence 5 mm, pour limiter la surface interne de l'outil rotatif 7, et éventuellement de l'embout 36, exposée à la préparation.

La présence des ailettes 44, 45 facilite le nettoyage des lèvres 30, 31 sur le clapet anti-retour 28 au moyen d'un produit nettoyant disposé dans un récipient, lorsque ledit clapet anti-retour 28 n'est pas démonté complètement. En effet, la rotation de la partie tubulaire 20 avec l'outil rotatif 7 plongé dans le produit nettoyant permet aux ailettes 44, 45 de faire remonter ledit produit nettoyant jusqu'aux lèvres 30, 31, ledit produit nettoyant s'évacuant ensuite au travers des fenêtres 48, 49. Ces ailettes 44, 45 participent également au brassage de la préparation dans le récipient 4, en complément d'un ressort périphérique 50 agencé autour du contour 47 sur l'embout 36.

La description qui précède d'un mode préférentiel de réalisation n'est pas limitative, des variantes pouvant être envisagées sans sortir du cadre de l'invention.

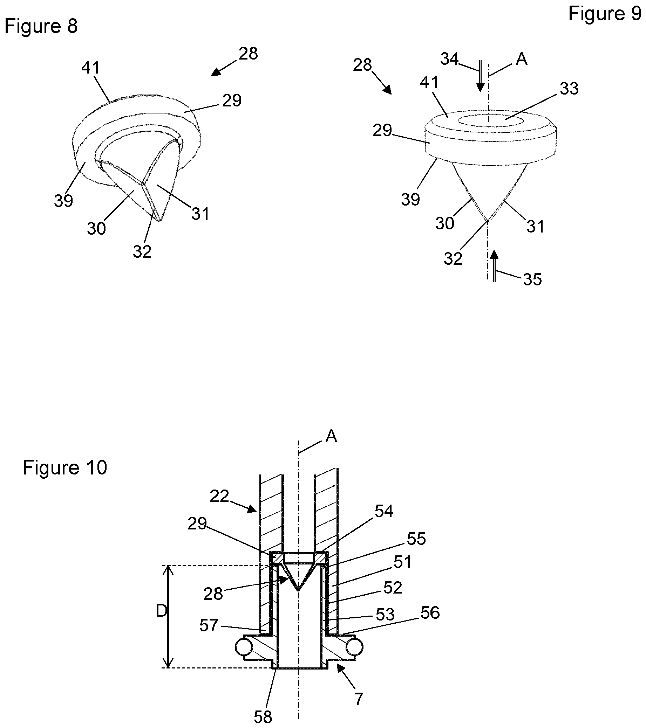

A titre d'exemple, l'emboîtement de la portion d'extrémité inférieure 22 de la partie tubulaire 20 avec l'outil rotatif 7 peut être réalisé selon un mode de réalisation différent de celui décrit précédemment. Sur la figure 10, la portion d'extrémité inférieure 22 comprend un embout 51 qui comporte un logement 52. Ce logement 52 reçoit par emboîtement le clapet anti-retour 28 et une portion tubulaire 53 de l'outil rotatif 7. La collerette 29 du clapet anti-retour 28 est prise en sandwich entre le fond 54 du logement 52, en appui contre la face supérieure 41 de la collerette 29, et l'extrémité supérieure 55 de la portion tubulaire 53, en appui contre la face inférieure 39 de la collerette 29. L'outil rotatif 7 comprend un épaulement externe 56 sur lequel vient en butée l'extrémité inférieure 57 de l'embout 51, de sorte à délimiter la position d'emboîtement entre la portion d'extrémité inférieure 22 et l'outil rotatif 7, assurant le maintien du clapet anti-retour 28 dans le logement 51 et l'étanchéité entre ledit clapet anti-retour 28 et la portion d'extrémité inférieure 22. L'extrémité inférieure 58 de l'outil rotatif 7 vient en appui contre le fond du récipient 4 lorsque ledit outil rotatif est plongé dans la préparation. La distance D séparant la collerette 29 et l'extrémité inférieure 58 de l'outil rotatif 7 correspond à la longueur dudit outil rotatif 7. Cette distance D est inférieure à 30 mm, de préférence inférieure à 20 mm, de préférence inférieure à 5 mm.

Selon ces deux variantes décrites ci-avant, l'emboîtement entre la portion d'extrémité inférieure 22 de la partie tubulaire 20 et l'outil rotatif 7 s'effectue très facilement, sans nécessiter aucun outil. En outre, lorsque l'outil rotatif 7 est dégagé de la portion d'extrémité inférieure 22, le clapet anti-retour 28 peut être retiré en sorte de réaliser de temps en temps son nettoyage sous l'eau.

## Revendications

1. Dispositif d'agitation rotatif (6) d'une machine de préparation de boissons (1), lequel comprend un outil rotatif (7) autour d'un axe A et destiné à agiter une préparation contenue dans un récipient (4), et un conduit (24) d'acheminement d'eau chaude et/ou de vapeur vers l'outil rotatif, ledit conduit d'acheminement comportant une partie tubulaire (20) qui s'étend le long de l'axe A entre une première portion d'extrémité (22) qui est accouplée à l'outil rotatif au moyen d'un premier dispositif d'accouplement et une seconde portion d'extrémité (23) qui est accouplée à un arbre d'entrainement (12) au moyen d'un second dispositif d'accouplement (25) **caractérisé en ce que** ledit dispositif d'agitation rotatif (6) comprend un clapet anti-retour (28) agencé au niveau de la première portion d'extrémité, le clapet anti-retour étant configuré pour empêcher la montée de ladite préparation vers l'intérieur de la partie tubulaire.

2. Dispositif d'agitation rotatif (6) selon la revendication 1, **caractérisé en ce que** le clapet anti-retour (28) est un joint souple comportant deux lèvres (30, 31) du type « bec de canard »

3. Dispositif d'agitation rotatif (6) selon l'une quelconque des revendications 1 à 2, **caractérisé en ce que** le premier dispositif d'accouplement comporte des moyens d'emboîtement démontables mis en œuvre entre l'outil rotatif (7) et la première portion d'extrémité (22), les moyens d'emboîtement étant configurés pour maintenir en position le clapet anti-retour (28) au niveau de la première portion d'extrémité.

4. Dispositif d'agitation rotatif (6) selon la revendication 3, **caractérisé en ce que** les moyens d'emboîtement définissent un logement (37, 52) dans lequel est placé le clapet anti-retour (28), ledit clapet comprenant une collerette (29) qui s'étend radialement à l'axe A et qui est maintenue bloquée en sandwich entre une première face d'appui (40, 54) de la première portion d'extrémité (22) et une seconde face d'appui (38, 55) de l'outil rotatif (7).

5. Dispositif d'agitation rotatif (6) selon la revendication 4, **caractérisé en ce que** l'outil rotatif (7) comprend un embout (36) comportant le logement (37) dans lequel est défini un épaulement interne (38) formant la seconde face d'appui, la première portion d'extrémité (22) étant configurée pour s'emboîter dans le logement, l'extrémité inférieure (40) de la première portion d'extrémité formant la première face d'appui.

6. Dispositif d'agitation rotatif (6) selon la revendication 5, **caractérisé en ce que** la première portion d'extrémité (22) comprend un épaulement externe (42) sur lequel une extrémité supérieure (43) de l'embout (36) vient en appui lors de l'emboîtement de ladite première portion d'extrémité dans le logement (37).

7. Dispositif d'agitation rotatif (6) selon l'une quelconque des revendications 3 à 6, **caractérisé en ce que** les moyens d'emboîtement sont configurés pour assurer un démontage manuel de l'outil rotatif (7).

8. Dispositif d'agitation rotatif (6) selon l'une quelconque des revendications 1 à 7, **caractérisé en ce que** l'outil rotatif (7) comporte un organe d'appui (46, 58) destiné à coopérer avec un fond du récipient (4), la distance D entre le clapet anti-retour (28) et l'organe d'appui étant inférieure à 30 mm, de préférence inférieure à 20 mm, de préférence inférieure à 5 mm.

9. Dispositif d'agitation rotatif (6) l'une quelconque des revendications 1 à 8, **caractérisé en ce que** l'outil rotatif (7) comporte des ailettes internes (44, 45) agencées sous le clapet anti-retour (28) et destinées à faire remonter vers le clapet anti-retour un produit de nettoyage lorsque la partie tubulaire (20) et l'outil rotatif sont mis en rotation avec du produit de nettoyage contenu dans un récipient.

10. Dispositif d'agitation rotatif (6) selon l'une quelconque des revendications 1 à 9, **caractérisé en ce qu'**il comporte un moteur électrique (10) destiné à entrainer l'arbre d'entraînement (12).

11. Dispositif d'agitation rotatif (6) selon l'une quelconque des revendications 1 à 10, **caractérisé en ce que** l'arbre d'entrainement (12) comporte une partie creuse (18) d'acheminement d'eau chaude et/ou de vapeur qui communique avec la partie tubulaire (20) lors de leur accouplement.

12. Dispositif d'agitation rotatif (6) selon la revendication 11, **caractérisé en ce qu'**il comporte une boite à vapeur (11) comportant une chambre (15), un canal radial (16) d'entrée vapeur, deux paliers (13, 14) étanches de guidage de l'arbre d'entrainement (12) et **en ce que** la partie creuse (18) d'acheminement d'eau chaude et/ou de vapeur est configurée pour relier la chambre (15) à la partie tubulaire (20).

## Patentansprüche

1. Drehrührvorrichtung (6) einer Getränkezubereitungsmaschine (1), die ein Drehwerkzeug (7) um eine Achse A umfasst und dazu bestimmt ist, eine Zubereitung, die in einem Behälter (4) enthalten ist, zu rühren, und eine Förderleitung (24) von Warmwasser und/oder Dampf zu dem Drehwerkzeug, wobei die Förderleitung einen rohrförmigen Teil (20) umfasst, der sich entlang der Achse A zwischen einem ersten Endabschnitt (22), der mit dem Drehwerkzeug mittels einer ersten Kopplungsvorrichtung gekoppelt ist, und einem zweiten Endabschnitt (23), der mit einer Antriebswelle (12) mittels einer zweiten Kopplungsvorrichtung (25) gekoppelt ist, erstreckt, **dadurch gekennzeichnet, dass** die Drehrührvorrichtung (6) ein Rückschlagventil (28) umfasst, das im Bereich des ersten Endabschnitts eingerichtet ist, wobei das Rückschlagventil dazu konfiguriert ist, das Ansteigen der Zubereitung zu dem Inneren des rohrförmigen Teils zu verhindern.

2. Drehrührvorrichtung (6) nach Anspruch 1, **dadurch gekennzeichnet, dass** das Rückschlagventil (28) eine geschmeidige Dichtung ist, die zwei Lippen (30, 31) vom Typ "Entenschnabel" umfasst.

3. Drehrührvorrichtung (6) nach einem der Ansprüche 1 bis 2, **dadurch gekennzeichnet, dass** die erste Kopplungsvorrichtung abnehmbare Einrastmittel umfasst, die zwischen dem Drehwerkzeug (7) und dem ersten Endabschnitt (22) umgesetzt sind, wobei die Einrastmittel dazu konfiguriert sind, das Rückschlagventil (28) im Bereich des ersten Endabschnitts in Position zu halten.

4. Drehrührvorrichtung (6) nach Anspruch 3, **dadurch gekennzeichnet, dass** die Einrastmittel eine Aufnahme (37, 52) definieren, in der das Rückschlagventil (28) platziert ist, wobei das Ventil einen Bund (29) umfasst, der sich radial zu der Achse A erstreckt, und der zwischen einer ersten Auflagefläche (40, 54) des ersten Endabschnitts (22) und einer zweiten Auflagefläche (38, 55) des Drehwerkzeug (7) eingeschlossen blockiert gehalten ist.

5. Drehrührvorrichtung (6) nach Anspruch 4, **dadurch gekennzeichnet, dass** das Drehwerkzeug (7) einen Ansatz (36) umfasst, der die Aufnahme (37) umfasst, in der eine Innenschulter (38) definiert ist, die die zweite Auflagefläche bildet, wobei der erste Endabschnitt (22) konfiguriert ist, um in die Aufnahme einzurasten, wobei das untere Ende (40) des ersten Endabschnitts die erste Auflagefläche bildet.

6. Drehrührvorrichtung (6) nach Anspruch 5, **dadurch gekennzeichnet, dass** der erste Endabschnitt (22) eine Außenschulter (42) umfasst, auf der ein oberes Ende (43) des Ansatzes (36) bei dem Einrasten des ersten Endabschnitts in der Aufnahme (37) zum Aufliegen kommt.

7. Drehrührvorrichtung (6) nach einem der Ansprüche 3 bis 6, **dadurch gekennzeichnet, dass** die Einrastmittel dazu konfiguriert sind, eine manuelle Demontage des Drehwerkzeugs (7) sicherzustellen.

8. Drehrührvorrichtung (6) nach einem der Ansprüche 1 bis 7, **dadurch gekennzeichnet, dass** das Drehwerkzeug (7) ein Auflageorgan (46, 58) umfasst, das dazu bestimmt ist, mit einem Boden des Behälters (4) zusammenzuwirken, wobei der Abstand D zwischen dem Rückschlagventil (28) und dem Auflageorgan kleiner ist als 30 mm, vorzugsweise kleiner als 20 mm, vorzugsweise kleiner als 5 mm.

9. Drehrührvorrichtung (6) nach einem der Ansprüche 1 bis 8, **dadurch gekennzeichnet, dass** das Drehwerkzeug (7) Innenrippen (44, 45) umfasst, die unter dem Rückschlagventil (28) eingerichtet und dazu bestimmt sind, ein Reinigungsprodukt zu dem Rückschlagventil aufsteigen zu lassen, wenn der rohrförmige Teil (20) und das Drehwerkzeug mit Reinigungsprodukt, das in einem Behälter enthalten ist, in Betrieb genommen werden.

10. Drehrührvorrichtung (6) nach einem der Ansprüche 1 bis 9, **dadurch gekennzeichnet, dass** sie einen Elektromotor (10) umfasst, der dazu bestimmt ist, die Antriebswelle (12) anzutreiben.

11. Drehrührvorrichtung (6) nach einem der Ansprüche 1 bis 10, **dadurch gekennzeichnet, dass** die Antriebswelle (12) einen hohlen Teil (18) zum Fördern von Warmwasser und/oder Dampf umfasst, der mit dem rohrförmigen Teil (20) bei ihrem Koppeln in Kommunikation steht.

12. Drehrührvorrichtung (6) nach Anspruch 11, **dadurch gekennzeichnet, dass** sie einen Dampfkasten (11) umfasst, der eine Kammer (15), einen radialen Dampf Eingangskanal (16), zwei Dichtelager (13, 14) zum Führen der Antriebswelle (12) umfasst, und dass der hohle (18) zum Fördern von Warmwasser und/oder Dampf konfiguriert ist, um die Kammer (15) mit dem rohrförmigen Teil (20) zu verbinden.

## Claims

1. Rotary stirring device (6) for beverage preparation machine (1), which comprises a rotary tool (7) about an axis A and intended to stir a preparation contained in a container (4), and a conduit (24) for conveying hot water and/or steam to the rotary tool, said conveying conduit comprising a tubular portion (20) which extends along the axis A between a first end portion (22) which is coupled with the rotary tool by means of a first coupling device and a second end portion (23) which is coupled with a drive shaft (12) by means of a second coupling device (25), **characterised in that** said rotary stirring device (6) comprises a check valve (28) arranged at the level of the first end portion, the check valve being configured to prevent the rising of said preparation inwards from the tubular portion.

2. Rotary stirring device (6) according to claim 1, **characterised in that** the check valve (28) is a flexible seal comprising two lips (30, 31) of the "duck's beak" type.

3. Rotary stirring device (6) according to any one of claims 1 to 2, **characterised in that** the first coupling device comprises dismountable interlocking means implemented between the rotary tool (7) and the first end portion (22), the interlocking means being configured to hold the check valve (28) in position at the level of the first end portion.

4. Rotary stirring device (6) according to claim 3, **characterised in that** the interlocking means define a housing (37, 52), wherein is placed the check valve (28), said valve comprising a collar (29) which extends radially to the axis A and which is held blocked and sandwiched between a first supporting face (40, 54) of the first end portion (22) and a second supporting face (38, 55) of the rotary tool (7).

5. Rotary stirring device (6) according to claim 4, **characterised in that** the rotary tool (7) comprises a nozzle (36) comprising the housing (37), wherein is defined an inner shoulder (38) forming the second supporting face, the first end portion (22) being configured to be interlocked in the housing, the lower end (40) of the first end portion forming the first supporting face.

6. Rotary stirring device (6) according to claim 5, **characterised in that** the first end portion (22) comprises an outer shoulder (42) on which an upper end (43) of the nozzle (36) bears during the interlocking of said first end portion in the housing (37).

7. Rotary stirring device (6) according to any one of claims 3 to 6, **characterised in that** the interlocking means are configured to ensure a manual dismounting of the rotary tool (7).

8. Rotary stirring device (6) according to any one of claims 1 to 7, **characterised in that** the rotary tool (7) comprises a supporting member (46, 58) intended to engage with a bottom of the container (4), the distance D between the check valve (28) and the supporting member being less than 30 mm, preferably less than 20 mm, preferably less than 5 mm.

9. Rotary stirring device (6) according to any one of claims 1 to 8, **characterised in that** the rotary tool (7) comprises inner fins (44, 45) arranged under the check valve (28) and intended to make a cleaning product rise towards the check valve when the tubular portion (20) and the rotary tool are rotated with the cleaning product contained in a container.

10. Rotary stirring device (6) according to any one of claims 1 to 9, **characterised in that** it comprises an electric motor (10) intended to drive the drive shaft (12).

11. Rotary stirring device (6) according to any one of claims 1 to 10, **characterised in that** the drive shaft (12) comprises a hollow portion (18) for conveying hot water and/or steam which communicates with the tubular portion (20) during their coupling.

12. Rotary stirring device (6) according to claim 11, **characterised in that** it comprises a steam box (11) comprising a chamber (15), a steam inlet radial channel (16), two sealed bearings (13, 14) for guiding the drive shaft (12) and **in that** the hollow portion (18) for conveying hot water and/or steam is configured to connect the chamber (15) to the tubular portion (20).
